# EUROPEAN PATENT APPLICATION

(11) **EP 1 834 938 A1**
(43) Date of publication of application: **19.09.2007**
(21) Application number: 05826177.7
(22) Date of filing: 26.12.2005
(51) Int. Cl.: C05F 1/00, C14C 1/00

(54) **IMPROVEMENTS TO PATENT OF INVENTION P200001758, METHOD FOR THE TRANSFORMATION OF CHROME-FREE TANNING WASTE AND PRODUCTS THUS OBTAINED**

(30) Priority: 30.12.2004 ES 200403161
(71) Applicant: Laboratorio Químico Pons, S.L., 46017 Valencia (ES)
(72) Inventor: PONS RAGA, Alberto, E-46118 Serra - Valencia (ES)
(74) Representative: Urizar Anasagasti, Jesus Maria
(86) International application number: PCT/ES2005/070183
(87) International publication number: WO 2006/072645

(57) **Abstract**

The invention relates to improvements to patent of invention P200001758, "Method for the transformation of chrome-free tanning waste and products thus obtained", essentially consisting in dividing the continuous process described in said patent into two sequences or subprocesses. According to the invention, during the first sequence, the industrial waste used in the process can be optimized and the range of products to be obtained can be broadened, for example, fat, calcium salt and liquid solution of peptides. During the second sequence, the liquid peptide solution is transformed into a solution of free amino acids. The process can be extended to any liquid peptide solution regardless of the nature of the liquid, since said peptides originate from a source of animal protein or from a source of vegetable protein.

## Description

### Object of the Invention

This specification introduces an improvement in the method described in the Spanish patent with application number P200001758 and entitled "Method for the transformation of chrome-free tanning waste and products thus obtained". This improvement essentially consists of dividing the continuous process described in the reference patent into two sequences or subprocesses, whereby it is achieved that:
A) During the first sequence, the industrial waste used in the process can be optimized and the range of products to be obtained can be broadened, for example, fat, calcium salt and liquid peptide solution.
B) During the second sequence the liquid peptide solution is transformed into a solution of free amino acids.

### Background of the Invention

Spanish patent with application number P200001758 and entitled "Method for the transformation of chrome-free tanning waste and products thus obtained" describes a continuous process after which a type of raw materials suitable for different production sectors is obtained.

Nevertheless, the application of the same additives of the reference patent, with basic modifications in the manner of applying them, allows obtaining a series of products with an unquestionable industrial attraction, such as fat, calcium salts, liquid peptide solution and the solution of free amino acids derived therefrom.

### Description of the Invention

The following improvements are set forth in order to considerably improve the results obtained with the process described in patent of invention P200001758.

This improvement essentially consists of dividing the continuous process described in the reference patent into two sequences or subprocesses, whereby it is achieved that during the first sequence, the industrial waste used in the process can be optimized and the range of products to be obtained can be broadened, for example, fat, calcium salt and liquid peptide solution. On the other hand, during the second sequence the liquid peptide solution is transformed into a solution of free amino acids, and at the same time it allows claiming and giving fame to the hydrolysis of peptides to free amino acids regardless of the nature of the origin of the peptide solutions.

Chromium-free tanning industry waste, such as tallow (adipose tissue adhered to the skin which is separated in the hide preparing phases), spetches (skin trimmings which are carried out to clean hide ends and defects in the hide preparing phases), hair and split (tissue formed by elastin and collagen which is obtained in the hide thickness adjusting and splitting process), is homogenized, regardless of the amount of each of such wastes. A mineral origin acid is then added, adding a hydrolysis accelerator consisting of a noble metal with a full electronic d-shell (also called heavy metals with a low melting point, IIb) in a 0 valency state. The mass is then introduced in an autoclave and is subjected to a heat treatment. The mass is subsequently removed from the autoclave and subjected to a neutralization process until reaching a pH value comprised between 3 and 4, by means of adding any inorganic basic/caustic product. The neutralized and homogenized mass is subjected to filtration by means of the filter press technique or any other technique existing on the market, for the purpose of thus separating the liquid fraction from the solid fraction. The solid fraction is collected for subsequent treatment and the liquid fraction is introduced in a system which allows separating phases, regardless of the existing or applied operative system.

Given that the liquid fraction is formed by a peptide solution in an aqueous medium with a density greater than 1.0 g/cc and by fat with a density of less than 1.0 g/cc, the action of gravity would clearly separate the two liquid phases.

This method achieves the separation of the residue into the following three new products with an unquestionable greater industrial attraction:
- Solid fraction rich in calcium salt.
- Liquid fraction rich in peptides.
- Fat

The second sequence of the process is described below.

A mineral origin acid is again added to the liquid fraction rich in peptides, or any source of peptides with either an animal or vegetable origin, until pH values comprised between 0 and 4. Group VII semimetals (also called Group VIa non-metals) in a zero valency state, and Group VIb brittle heavy metals are subsequently added to the homogenized mass. Phenols and phenolates with a molecular weight of less than 450 are finally added. The mass is subsequently introduced in an autoclave and is subjected to a temperature comprised between 125°C and 185°C for at least 1 hour and up to a maximum of 8 hours. The product thus obtained has gone from being rich in peptides to being rich in free amino acids.

As observed, two new aspects with respect to the original patent have been introduced in this second sequence:
- The addition of a new additive called Group VIb brittle heavy metals.
- The use in this sequence of the aqueous peptide solution obtained in the first sequence as a source of raw material, which solution, with the addition of additives and processed as described above, will be transformed into a solution of free amino acids. The peptide solution is defined as the fractions of proteins with a variable molecular weight, and watersoluble proteins

Water is added in any ratio to the solid fraction rich in calcium salts, which is also obtained in the first sequence, and this solution is subjected to a saponification process.

The mass thus obtained is subsequently filtered through a filter press, or any other existing on the market, and the solids thus obtained yield a product with high calcium salt content. The liquid fraction resulting from obtaining solids rich in calcium salts is added to vegetable pruning remains and fermented as a solid mass by means of adding bacterial microorganisms, preferably from the family of azotobacter, heterofermentative lactobacillus, halophilic bacteria, and from the Streptomyces families, keeping them in fermentation and turning hoppers for a minimum time of 45 days of constant addition and 15 days of completion to transform this solid mass into usable peat.

### Preferred Embodiment of the Invention

The improvements to patent of invention P200001758, "Method for the transformation of chrome-free tanning waste and products thus obtained" have the following practical and

### preferred embodiment:

Chromium-free tanning industry waste, such as tallow, spetches, hair and split is homogenized, regardless of the amount of each of such wastes.

A mineral origin acid, any of those existing on the market, being adjusted to a pH comprised between a value of 0.1 and 2.0, and adding a hydrolysis accelerator consisting of a noble metal with a full electronic d-shell (also called heavy metals with a low melting point, IIb) in a 0 valency state in a percentage amount which can vary from 0.001 to 1% of the total mass. The mass is then introduced in an autoclave and is subjected to a heat treatment for 2- 4 hours at a temperature comprised between 120°C and 145°C. The mass is subsequently removed from the autoclave and subjected to a neutralization process until reaching a pH value comprised between 3 and 4, by means of adding any inorganic basic/caustic product. The neutralized and homogenized mass is subjected to filtration by means of the filter press technique or any other technique existing on the market, for the purpose of thus separating the liquid fraction from the solid fraction. The solid fraction is collected for subsequent treatment and the liquid fraction is introduced in a system which allows separating phases, regardless of the existing or applied operative system.

Given that the liquid fraction is formed by a peptide solution in an aqueous medium with a density greater than 1.0 g/cc and by fat with a density of less than 1.0 g/cc, the action of gravity would clearly separate the two liquid phases.

The results of this method are the separation of the residue into three new products:
- Solid fraction rich in calcium salt.
- Liquid fraction rich in peptides.
- Fat.

The second sequence of the process is described below.

A mineral origin acid is again added to the liquid fraction rich in peptides, or any source of peptides with either an animal or vegetable origin, until pH values comprised between 0 and 4. Group VII semimetals (also called Group VIa non-metals) in a zero valency state and Group VIb brittle heavy metals are subsequently added to the homogenized mass, all of them in amounts comprised between 0.0001 and 1% of the total mass. Phenols and phenolates with a molecular weight of less than 450 are finally added in amounts that can vary between 0.001 and 1% of the total mass.

The mass is subsequently introduced in an autoclave and is subjected to a temperature comprised between 125°C and 185°C for at least 1 hour and up to a maximum of 8 hours. The product thus obtained has gone from being rich in peptides to being rich in free amino acids.

Water is added in any ratio to the solid fraction rich in calcium salts, which is also obtained in the first sequence, and this solution is subjected to a saponification process with any basic or caustic salt, with pH ranges from 10 to 12, and at a temperature of 100°C for a time between one and two hours.

The mass thus obtained is subsequently filtered through a filter press, or any other existing on the market, and the solids thus obtained yield a product with high calcium salt content. The liquid fraction resulting from obtaining solids rich in calcium salts is added to vegetable pruning remains and fermented as a solid mass by means of adding bacterial microorganisms, preferably from the family of azotobacter, heterofermentative lactobacillus, halophilic bacteria, and from the Streptomyces families, keeping them in fermentation and turning hoppers for a minimum time of 45 days of constant addition and 15 days of completion to transform this solid mass into usable peat.

Having sufficiently described the nature of the present invention as well as a way of putting it into practice, it must only be added that said invention can undergo certain variations in form and materials, provided that said alterations do not substantially vary the features claimed below.

## Claims

1. Improvements to patent of invention P200001758, "Method for the transformation of chrome-free tanning waste and products thus obtained", **characterized in that** in a first step, chromium-free tanning industry waste, tallow, spetches, hair and split, is homogenized and ground, regardless of the amount of each of such wastes; a mineral origin acid is then added, adding a hydrolysis accelerator; the mass is then introduced in an autoclave and is subjected to heat treatment; the mass is subsequently removed from the autoclave and subjected to a neutralization process; the neutralized and homogenized mass is subjected to filtration; the solid fraction is collected for subsequent treatment and the liquid fraction is introduced in a system which allows separating phases, a solid fraction rich in calcium salt, a liquid fraction rich in peptides and fat being obtained. In a second step, the peptide solutions of the first step are transformed such that a mineral origin acid is again added to the liquid peptide solution, or any source of peptides with either an animal or vegetable origin, Group VII semimetals (also called Group VIa non-metals) in a zero valency state, Group VIb brittle heavy metals are added to the homogenized mass, and phenols and phenolates with a molecular weight of less than 450 are finally added; the mass is subsequently introduced in an autoclave and is subjected to heat treatment; the product thus obtained has gone from being rich in peptides to being rich in free amino acids.

2. Improvements to patent of invention P200001758, "Method for the transformation of chrome-free tanning waste and products thus obtained" according to claim 1, **characterized in that** a mineral origin acid, any of those existing on the market, is added, being adjusted to a pH comprised between a value of 0.1 and 2.0 of the total mass thus obtained.

3. Improvements to patent of invention P200001758, "Method for the transformation of chrome-free tanning waste and products thus obtained" according to claim 1, **characterized in that** a hydrolysis accelerator is added, which accelerator consists of a noble metal with a full electronic d-shell (also called heavy metals with a low melting point, IIb) in a 0 valency state in a percentage which can vary from 0.001 to 1% of the total mass.

4. Improvements to patent of invention P200001758, "Method for the transformation of chrome-free tanning waste and products thus obtained" according to claim 1, **characterized in that** the mass thus obtained is introduced in an autoclave and is subjected to a heat treatment for 2-4 hours at a temperature comprised between 120°C and 145°C.

5. Improvements to patent of invention P200001758, "Method for the transformation of chrome-free tanning waste and products thus obtained" according to claim 1, **characterized in that** the mass is removed from the autoclave and subjected to a neutralization process until reaching a pH value comprised between 3 and 4, by means of adding any inorganic basic/caustic product.

6. Improvements to patent of invention P200001758, "Method for the transformation of chrome-free tanning waste and products thus obtained" according to claim 1, **characterized in that** the neutralized and homogenized mass is subjected to filtration by means of the filter press technique or any other technique existing on the market, for the purpose of thus separating the liquid fraction from the solid fraction.

7. Improvements to patent of invention P200001758, "Method for the transformation of chrome-free tanning waste and products thus obtained" according to claim 1, **characterized in that** the solid fraction is collected for subsequent treatment and the liquid fraction is introduced in a system which allows separating phases, regardless of the existing or applied operative system; given that the liquid fraction is formed by a peptide solution in an aqueous medium with a density greater than 1.0 g/cc and by fat with a density of less than 1.0 g/cc, the sole action of gravity would clearly separate the two liquid phases.

8. Improvements to patent of invention P200001758, "Method for the transformation of chrome-free tanning waste and products thus obtained" according to claim 1, **characterized in that** a mineral origin acid is added to the liquid peptide solution, or any source of peptides with either an animal or vegetable origin, until pH values comprised between 0 and 4 of the total mass obtained.

9. Improvements to patent of invention P200001758, "Method for the transformation of chrome-free tanning waste and products thus obtained" according to claim 1, **characterized in that** the liquid peptide fraction is either obtained by this method for the transformation of tanning waste, or is the liquid peptide fraction elaborated from animal protein, for example egg white, and whey, or from vegetable protein, gluten-type protein or soybean peptone, such that the transformation into free amino acids can be applied to it.

10. Improvements to patent of invention P200001758, "Method for the transformation of chrome-free tanning waste and products thus obtained" according to claim 1, **characterized in that** Group VII semimetals (also called Group VIa non-metals) in a zero valency state are added to the homogenized mass in amounts comprised between 0.0001 and 1% of the total mass.

11. Improvements to patent of invention P200001758, "Method for the transformation of chrome-free tanning waste and products thus obtained" according to claim 1, **characterized in that** Group VIb brittle heavy metals are added to the homogenized mass, all of them in amounts comprised between 0.0001 and 1% of the total mass.

12. Improvements to patent of invention P200001758, "Method for the transformation of chrome-free tanning waste and products thus obtained" according to claim 1, **characterized in that** phenols and phenolates with a molecular weight of less than 450 are added, in amounts which can vary from 0.001 to 1% of the total mass.

13. Improvements to patent of invention P200001758, "Method for the transformation of chrome-free tanning waste and products thus obtained" according to claim 1, **characterized in that** the mass is introduced in an autoclave and is subjected to a temperature comprised between 125°C and 185°C for at least 1 hour and up to a maximum of 8 hours.

14. Improvements to patent of invention P200001758, "Method for the transformation of chrome-free tanning waste and products thus obtained" according to claim 1, **characterized in that** the product thus obtained has gone from being rich in peptides to being rich in free amino acids.

15. Improvements to patent of invention P200001758, "Method for the transformation of chrome-free tanning waste and products thus obtained" according to claim 1, **characterized in that** water is added in any ratio to the obtained solid fraction rich in calcium salts, and this solution is subjected to a saponification process with any basic or caustic salt, in a pH range from 10 to 12, and at a temperature of 100°C for one or two hours; the mass thus obtained is filtered and the solids thus obtained yield a product with high calcium salt content.
